# EUROPEAN PATENT APPLICATION

(11) **EP 4 725 599 A1**
(43) Date of publication of application: **15.04.2026**
(21) Application number: 24205936.8
(22) Date of filing: 10.10.2024
(51) Int. Cl.: B01L 3/00, G01N 15/1433

(54) **A DEVICE AND METHOD FOR CHARACTERIZING OBJECTS**

(71) Applicant: Imec VZW, 3001 Leuven (BE)
(72) Inventor: ROEBROEK, Thijs, 3010 Kessel-Lo (BE); VAN ROY, Willem, 3360 Bierbeek (BE); CHACON ORELLANA, Laura, 3210 Lubbeek (BE); STAKENBORG, Tim, 3001 Heverlee (BE)
(74) Representative: AWA Sweden AB

(57) **Abstract**

According to an aspect of the present inventive concept there is provided a device for characterizing objects comprising: a flow channel configured to pass a flow of liquid, wherein: the flow of liquid carries the objects, the flow channel comprises a zone associated with a category, wherein a surface is coated with molecules having an affinity and specificity to the category, whereby the surface forms an object movement modifying (OMM) surface configured to modify the movement of the object by binding and releasing the object; wherein the device is configured to modulate a force exerted on the object; wherein the device is configured to exert a first condition and a second condition on the object, the first condition being adapted to promote the binding of an object belonging to the category to the OMM surface and the second condition being adapted to promote the releasing of an object bound to the OMM surface.

## Description

### Technical field

The present description relates to a device and method for characterizing objects.

### Background

Characterization of objects is important for analysis of the objects and for further use of the objects, for instance, if the object is a cell, in cell therapy. Cell characterization can be used as a first step before cell separation based on the characterization. Moreover, it can be used to identify cells in a sample of unknown cells.

According to some methods, characterization of objects involves labelling the object, for instance labelling of cells. The object may for instance be labelled with magnetic beads or with fluorescent labels. A label-free method is advantageous since it provides the opportunity to use the object after characterization without having to remove the labels. It also can allow to characterize objects directly without the need for any labeling step.

Thus, there is a need in the art for improvements.

### Summary

An objective of the present description is to provide a device for characterization of objects, such as to provide a device for characterization of cells. It is a further objective of the present description to provide a device for label-free characterization of objects. It is a further objective to provide object characterization devices which are cost-effective, and/or have a high object throughput and/or are compact and/or are reprogrammable. These and other objectives of the invention are at least partly met by the invention as defined in the independent claims. Preferred embodiments are set out in the dependent claims.

In the following the term cell refers to a biological cell, unless otherwise stated.

According to a first aspect, there is provided a device for characterizing objects comprising:
a flow channel configured to pass a continuous flow of liquid, wherein:
   the flow of liquid carries the objects,
   the flow channel comprises at least one zone,
   each zone of the flow channel is associated with an object category, and
   each zone of the flow channel comprises at least one surface coated with molecules having an affinity and specificity to the object category associated with the zone, the at least one surface of the zone being configured to modify, by the molecules coating the at least one surface, a movement of an object belonging to an associated object category of the zone as the object, carried by the flow of liquid, passes the zone, whereby the at least one surface forms at least one object movement modifying (OMM) surface, wherein the at least one OMM surface of at least one zone of the flow channel is configured to modify the movement of the object belonging to the associated object category of the zone by binding and releasing the object belonging to the associated object category of the zone;
wherein the device is configured to modulate a force exerted on the object;
wherein the device is configured to, by modulating the force, exert a first condition and a second condition on the object, the first condition being adapted to promote the binding of an object belonging to the object category to the OMM surface and the second condition being adapted to promote the releasing of an object bound to the OMM surface.

The objects may be biological cells, biological objects such as extracellular vesicles such as exosomes and/or other lipid nanoobjects or synthetic (bio)objects displaying specific antigens/receptors e.g. used for drug delivery.

Objects may be characterized by the molecules they comprise, such as the molecules they comprise at the surface of the object. For instance, biological cells may be characterized by the molecules comprised in the cell membrane. Molecules comprised in the cell membrane may e.g. be antigens.

A way of checking whether a surface of an object comprises a certain object surface molecule may be to let the object interact with a molecule that binds specifically to said object surface molecule.

For example, an antigen comprised in a cell membrane may correspond to one or more antibodies, where the antigen and antibody bind specifically to each other. Consequently, cells may be divided into cell categories depending on which cell membrane molecules they comprise or which molecules the cells bind to. For example, the antigen CD4 (cluster of differentiation 4) molecule in cell membranes is a glycoprotein which binds to anti-CD4 antibodies. Cells that bind to anti-CD4 antibodies may form one cell category. Such cells may be detected based on their modified movements when they travel through a zone with a OMM surface coated by anti-CD4 antibodies. Analogously, cells that bind to anti-CD8 (cluster of differentiation 8) antibodies may form another cell category. Such cells may be detected based on their modified movements when they travel through a zone with a OMM surface coated by anti-CD8 antibodies.

Thus, an object category may be a category of objects which binds to a specific molecule such as an antibody. An object category may be a category of objects that may have differences in the expression level of a certain molecule comprised in the object surface or in other ways expressed on the object. Different objects may have different levels of expression of a molecule on the object surface, this may be relevant to be able to categorize. Even further, an object may have different molecules expressed on the object surface. A combination of molecules expressed on the object surface and the number of molecules expressed on the object surface may place the object in several object categories, which may render a certain categorization. Each object may belong to different combinations of object categories.

The molecules coating at least one OMM surface of the at least one zone of the flow channel may comprise at least one of: antibodies, nanobodies, aptamers, lectins, receptors, antigens or molecularly imprinted polymers (MIPs). Antibodies, or nanobodies, or aptamers, or lectins, or receptors, or antigens or MIPs may have an affinity to specific object categories but not to other object categories. Antibodies, or nanobodies, or aptamers, or lectins, or receptors, or antigens or MIPs may bind to specific object categories but not to other object categories. Antibodies, or nanobodies, or aptamers, or lectins, or receptors, or antigens or MIPs may have a high sensitivity in binding to an object category. Thus, the percentage of true positive binding events may be high. Antibodies, or nanobodies, or aptamers, or lectins, or receptors, or antigens or MIPs may have a high specificity in binding to an object category. Thus, the percentage of false positive binding events may be low. Alternatively, the molecules coating at least one OMM surface of the at least one zone of the flow channel may comprise other molecules than antibodies, nanobodies, aptamers, lectins, receptors, antigens and MIPs e.g. comprise other molecules that bind specifically to an object surface molecule.

The molecules coating the at least one OMM surface may comprise a combination of molecules being specific to the same or different object surface molecules. By this, the OMM surface may identify an object having its surface covered by, or comprising, a plurality of different molecules, since this object may interact with the OMM surface in a different way than an object only having one type of molecules at the surface. Alternatively, the at least one OMM surface may be associated to a plurality of object categories.

An OMM surface may be configured to modify the movement of the object belonging to the associated object category of the zone by modifying e.g. the speed, direction or path of objects comprised in the object category. For example, the at least one OMM surface of at least one zone of the flow channel may be configured to modify the movement of the object belonging to the associated object category of the zone by binding and releasing the object belonging to the associated object category of the zone. Such a movement may be termed a bind-release movement. It should be understood that the binding and releasing of the object belonging to the associated object category may be made through interactions between several molecules on the OMM surface and several molecules on the surface of the object. As such, the binding and releasing of the object may be made stepwise, such that, for example, a plurality of molecules on the surface of the object binds to a plurality of molecules on the OMM surface. While releasing the interactions, not all interactions are released at the same time and the object may be deformed by this. This kind of bind and release interaction may be used to characterize if the object belongs to an object category with a relatively high expression of a surface molecule or an object category with a relatively lower expression of the surface molecule.

It should be understood that the modification of the movement could also result in slower velocity as well as stuttering, jumpy or irregular motion upon the binding and release between the molecules on the OMM surface and the molecules comprised in the surface of the object.

The OMM surface may be configured not to bind an object indefinitely. Binding and releasing the object may temporarily slow down or halt the object along its travel. Such a modified motion in the form of a modified speed may be detectable. The object may not necessarily bind and release at the same point of the OMM surface. The OMM surface may be configured to let an object bind to the OMM surface, roll a distance along the OMM surface, and then release from the OMM surface in a bind-roll-release movement. The object may e.g. roll along a surface in a direction different from the direction of the flow of liquid. Thus, the direction or path of an object belonging to a category associated with the OMM surface may be different from the path of an object belonging to a category not associated with the OMM surface.

The binding of the object to the OMM surface may depend on the expression level of the molecules on the surface of the object. Thus, an object may have a high, mid or low expression of a molecule. In a group of objects, it may be of interest to distinguish the objects into different categories depending on the expression level of the same molecule. Thus, all objects may interact with the same OMM surface, as they all express the same molecule. But an object with a high expression level may interact and bind in a different manner compared to an object with a low expression level.

Thus, the OMM surface may be associated to a plurality of categories. This may be realized by the expression levels of the molecules comprised in the surface of the object. However, it may further be realized by the OMM surface having an expression of different molecules such that objects having different molecules comprised in their surface interact with the same OMM surface.

It should be realized that by binding an object to the OMM surface is meant that at least one interaction is formed between the object and the OMM surface, e.g., between molecules on the surface of the object and molecules on the OMM surface. Further, it should be realized that by releasing an object is meant that one or more interactions are released. This implies that when an object is released, one or more interactions may be released but some interactions may still be maintained and may be replaced by other interactions causing the object to move (roll) on the OMM surface. The releasing of one or more interactions may further eventually cause the object to fully release from the OMM surface and thereafter follow the flow of liquid.

The second condition may be adapted to promote the releasing of the object bound to the OMM surface. This implies that a probability of the object being fully released from the OMM surface is relatively high but does not necessarily mean that the object will in fact be fully released from the OMM surface. It should be realized that the promoting of releasing of the object may cause only some interactions of the object with the OMM surface to be released such that the object may move along the OMM surface.

The second condition may be adapted to promote releasing of the object bound to the OMM surface such that a released objects moves along and passes through the OMM surface. This may be advantageous as the objects are not stuck in a queue after each other or to each other.

The OMM surface may be a surface of a wall of the flow channel in the zone, such as one or more of a top wall, bottom wall and a side wall of the flow channel or a combination thereof.

In addition or alternatively, at least one zone of the flow channel may comprise at least one obstacle, thereby forming at least one zone of obstacles, the at least one obstacle having a lateral surface configured to obstruct a path of the object carried by the flow of liquid, the lateral surface of the at least one obstacle of the at least one zone of obstacles being comprised in the at least one OMM surface of the at least one zone of obstacles.

The at least one obstacle of the at least one zone of obstacles of the flow channel may be either a pillar having an axis extending within the flow channel in a direction orthogonal to a main flow direction of the flow channel at a position of the pillar or a ridge having a height extending within the flow channel in a direction orthogonal to a main flow direction of the flow channel at a position of the ridge. The at least one obstacle need not necessarily be orthogonal to the main flow direction of the flow channel but may alternatively be tilted, such that the angle between the axis extending through the obstacle and a surface of the flow channel is less than 90°.

Obstacles in a zone may increase the number of times an object encounters a OMM surface during the travel through the zone. Consequently, the characterization may become more accurate. Further, obstacles may facilitate shorter zones such that the device may be compact. For example, if one zone comprising no obstacles is compared to a zone comprising obstacles the zone comprising no obstacles may need to be longer in order for the same accuracy to be achieved.

A continuous flow of liquid may prevent the objects from efficiently binding and releasing to the OMM surface. The flow may be so strong, that binding to the surface is negatively affected, for instance by hydrodynamic lift forces, if the objects are passing the OMM surface at a too high speed. Likewise, if the flow of liquid is very slow, the object may not release efficiently from the OMM surface.

Thus, it is a realization according to the first aspect that modulating the force exerted on the objects may promote an efficient binding and release of the object belonging to the associated object category of the zone. In other words, a probability of the object belonging to the associated object category of the zone actually binding to the OMM surface and a probability of a bound object actually releasing from the OMM surface may be modulated. The probabilities may be modulated such that they reach a relevant value for the application of the device.

It should thus be realized that the OMM surface will not necessarily modify movements of all biological cells belonging to the associated cell category of the zone that are present in the flow of liquid. However, thanks to the modulating of the force to exert a first condition on the object, the probability of the object binding to the OMM surface may be set to a desired value. In addition, it should be realized that exerting the second condition on the object does not necessarily imply that the object is released and in particular fully released from the OMM surface. However, the probability of the object releasing from the OMM surface may be set to a desired value.

It should further be realized that the probabilities of binding and releasing of an object may be dependent on several factors. For instance, the probabilities may be dependent on a binding on-rate constant (kₒₙ) and a binding off-rate constant (k_{off}) for the conditions exerted on the object and the associated time period during which the object is exerted to the condition. These constants may be related to the probabilities of individual interactions between the object and the OMM surface and an overall probability of the object interacting with the OMM surface.

The modulation of the force exerted on the object may be affected by variations of the flow of liquid, by the use of ultrasound, by optical variations or by the use of electrokinetics, such as dielectrophoresis (DEP).

The forces exerted on the objects may be modulated in a periodic pattern or in a quasi-periodic or pseudoperiodic pattern or in a random pattern. The modulation of the forces may differ in frequency, amplitude, duration or in any other way or combination of ways. Thus, the modulation of the forces acting on the object may change depending on the specific needs for the application of the device.

A first condition and a second condition are exerted on the objects. The first condition is adapted to promote the binding of an object belonging to the object category. Thus, the first condition allows the object to have sufficient probability to interact with the OMM surface. The second condition is adapted to promote the release of an object bound to the OMM surface. Thus, the second condition allows the object to increase the probability of releasing from the binding.

The first condition and the second condition may be exerted on the object in any combination, pattern or sequence such that the force exerted on the objects modulates in time the probabilities of the object to bind and release from the OMM surface. The transition between the first condition and the second condition may be a stepwise transition or a smooth continuous transition between the conditions. It should be understood that the device may be configured to exert a force such that the device reaches more than a first and a second condition, such that a third and a fourth condition. This may allow for intermediate probabilities of binding and release as compared to the first and the second condition.

As has already been discussed, the interaction between the molecules on the surface of the object and the molecules on the OMM surface may comprise several interactions between a plurality of molecules on each surface. While transitioning between the first condition and the second condition, the individual interactions between molecules on the OMM surface and molecules on the surface of the object may require different forces to release. Thus, while transitioning between the first condition and the second condition, the individual interactions between the molecules on each surface may release at different time points. This may lead to changes in morphology as well as e.g. a rolling behavior or e.g. an irregular motion of the object before all interactions are released and the object may return to move freely along the flow of liquid.

The first condition may be a first speed of the flow of liquid carrying the objects. The second condition may be a second speed of the flow of liquid. Thus, the speed of the flow of liquid may be modulated between a first and a second speed. The first speed being adapted to promote the binding of an object belonging to the object category to the OMM surface and the second speed adapted to promote the releasing of an object bound to the OMM surface.

Thus, it should be understood that the continuous flow of liquid means that we have a flow which continuously carries objects to the flow channel. However, there may be a temporary halt of the flow for instance when shifting from the second condition to the first condition or vice versa.

Modulation of the speed to decrease the speed may increase the probability of the object approaching and binding to the surface (kₒₙ), with a drawback that a low speed limits the probability of release of the object from the surface (k_{off}). Vice versa, having a high speed increases the probability for release of the object from the OMM surface (k_{off}) with a drawback of limiting the probability of binding to the OMM surface (kₒₙ). Thus, the modulation of the speed may sequentially change the probability of binding and release of the objects from the OMM surface to ensure that a condition providing a high probability of binding of an object to the OMM surface is followed by a condition providing a high probability of releasing of the object.

It should be realized that there may be several levels of speed associated with the flow of liquid and hence with one object carried by the flow of liquid. Thus, one object may change the speed stepwise or continuously. The modulation of the forces acting on the object may change the speed of the object. The speed of the object may then be further changed by interaction of the object with the OMM surface. As the modulation of the forces acting on the object may change stepwise or smoothly in a continuous way, the speed of the object when following the flow of liquid may change correspondingly. This will render a stepwise or continuous change in the probability of binding and releasing of the object to the OMM surface.

A continuous modulation of the speed of the flow of liquid carrying the objects may have the first speed and the second speed as end points. However, the first and the second speed may as well be part of speeds on a continuous modulation.

The first speed may be adapted to promote the binding of an object belonging to the object category to the OMM surface. Thus, the first speed may be so low that the molecules on the object surface have sufficient probability to interact with the molecules on the OMM surface. Thus, the molecules on the object surface have sufficient probability to bind to the OMM surface. After the binding, the object may be stuck in one place on the OMM surface or it may roll on the object surface such that several bonds are made between molecules on the object surface and the OMM surface. Alternatively, the bonds between the object and the OMM surface comprises several bonds which may bind and release individually in time and the behavior of the object on the surface may be different from being stuck or rolling on the surface. The first speed may be associated with the forces exerted on the object, as a low force may be associated with a low speed. E.g. a low lift force on an unbound object may be associated with a low speed.

The second speed may be adapted to promote the release of an object bound to the OMM surface. Thus, the second speed may be so high that the molecules on the object surface have the ability to release easily from the binding to the OMM surface. Thus, with the help from the second speed the object may more easily release from the OMM surface. The second speed may be associated with the forces exerted on the object, as a high force may be associated with a high speed. E.g. a high drag force on a bound object may be associated with a high speed.

The first speed and the second speed may be adapted for the application of the device or the objects characterized by the device. Thus, for some applications, the first speed may be higher than for other applications. For instance, distinguishing between objects with a high level of molecules on the object surface and objects with a low level of molecules on the object surface may require a higher first speed than distinguishing an expression of molecules on the object surface from a non-expression of molecules on the object surface.

As discussed above, the speed of the flow of liquid provides a hydrodynamic force exerted on the object. However, the speed of the flow of liquid may be held constant. Instead, another force exerted on the object may be modulated. It should further be realized, that modulation of the speed of the flow of liquid may be combined with modulation of another force exerted on the object.

Thus, the first condition and the second condition may be defined by one or more forces exerted on the object. At least one of the forces may be modulated. Modulation of a force may imply varying of the force in a range or may imply turning on or off a force.

The force exerted on the object may further comprise using ultrasound exerted on the objects. For instance, an ultrasound beam may be emitted onto the objects in the at least one zone for applying a force on the objects. The force may bring the objects towards the OMM surface for promoting binding of the object to the OMM surface or may push the objects away from the OMM surface promoting releasing of the object from the OMM surface. The force may be modulated so as to alternatingly bring the objects towards the OMM surface and push the objects away from the OMM surface.

According to an embodiment, an ultrasound beam may be turned on to reach the second condition and turned off to reach the first condition. Thus, using the ultrasound may promote the release of the object from the OMM surface.

According to an embodiment, electrokinetics, such as dielectrophoresis (DEP), may be used to reach the second condition. Thus, an electrical field may be turned on, causing movement of the objects increasing the probability of the object to bind or release from the binding to the OMM surface.

According to an embodiment, the walls of the flow channel may have a porosity, such that there may be a flow of liquid from the walls and across the flow channel, perpendicular to the flow of liquid carrying the objects through the flow channel. This perpendicular flow may be used to reach the first and/or the second condition and by that using the hydrodynamical forces to push the object towards the OMM surface or from the bonds to the OMM surface.

The force exerted on the object may further comprise the use of an optical force bringing the object towards the OMM surface and/or pushing the object away from the OMM surface. According to an embodiment, an optical modulation may be exerted on the object to reach the second condition.

The device is configured to provide a continuous flow of liquid. This implies that the objects may be characterized while a flow of liquid is continuously provided through the flow channel. Thanks to the modulation of the forces exerted on the object, the objects may still efficiently bind and release from the OMM surface while a continuous flow of liquid is provided. Hence, the characterization of the objects may be performed in a fast manner without a need for turning off a flow of liquid carrying objects and thereafter providing a separate flow of a washing liquid for forcing the objects to release from the OMM surface.

The characterization of the object is based on the behavior of the object when passing through the flow channel, and specifically the at least one zone. A difference in behavior when passing through the at least one zone, compared to passing through a part of the flow channel outside of the at least one zone may be used to characterize the object. The characterization may give information of the expression of object markers on the object surface, the level of object markers on the object surface or a combination of object markers on the object surface. This may be used to distinguish what kind of object is passing through the flow channel, or to characterize a known object into sub-groups within the type of object.

The characterization of the object may be based on the movement of the object as the object passes one or more zones. As elaborated on above, the OMM surface of a zone is configured to modify the movement of objects belonging to the associated object category. A single object may belong to several object categories associated with different zones. Thus, the characterization of the object may be based on a combination of the object categories associated with a plurality of zones and also on a behavior of the object when passing the respective zone.

After characterizing the object, the objects may be used for further analysis or therapy. The objects may further be sorted based on the characterization.

The device according to the first aspect provides a label free object characterization. The device is accurate, compact, has a high object throughput, is cost-effective, and is reprogrammable. By detecting a modified movement at a OMM surface, a target object may be identified and characterized. A modified movement may be a revealing sign which enables the object category of an object to be determined with high accuracy. It may e.g. be very improbable that an object exhibits a modified movement, e.g. a bind-release movement or a bind-roll-release movement at a OMM surface of a zone without having an affinity to the molecules coating the OMM surface. Thus, the probability of false positive detection events may be low. By improving the binding and releasing of the objects to the OMM surface, the accuracy of the object characterization is further improved.

The device according to the first aspect provides a compact object categorization device, as the objects can pass through the same flow channel and by passing the zone, the characterization can be made. Thus, there is no need for extra channels or parallel channels. In principle, one or a few modified movements may be all that is needed to detect an object such that it can be characterized properly.

The device according to the first aspect provides a high object throughput as several objects can pass the flow channel at the same time and yet all be characterized. Thus, the device enables to characterize an entire sample of objects in parallel.

The device enables cost-effective characterization of the objects. This may be a consequence of the device being compact and/or having a high object throughput. Less material may thereby be needed to manufacture the device.

The device enables reprogrammable characterization of objects. For example, if a higher sensitivity and/or specificity in the characterization is needed a higher threshold number of modified movements of an object in a zone may be required before the object is characterized.

The device may characterize objects in-vitro. The device may e.g. be used for characterizing objects, before an object sorting, to be used in object therapy. In object therapy large amounts of objects may need to be introduced into a patient in order to boost the immune system of the patient. One step in generating the immune-system-boosting objects may be to perform object sorting, advantageously label-free object sorting of characterized objects. For example, in CAR-T cell therapy, T-cells are derived from a blood sample by sorting out T-cells from other peripheral blood mononuclear cells (PBMCs) such as monocytes, lymphocytes, B cells and NK cells. The T-cells may subsequently be genetically engineered to express new chimeric antigen receptors (CAR) that will boost the patient's immune system. A device for characterizing cells having a high cell throughput as well as being label-free may herein be advantageous as this may reduce the processing time of the blood sample and thereby the survival rate of the cells.

According to one embodiment the device may be configured to cause a modified movement of the objects carried by the flow of liquid for identifying the object category to which the objects belong.

In other words, the objects entering the flow channel are unknown and the known OMM surface may reveal the identity of the objects. When entering the at least one zone, the device may reveal if the objects are interacting by binding and releasing from the OMM surface. If the objects are binding and releasing from the OMM surface, the objects belong to the object category associated with the OMM surface and the object is identified. If the object does not interact at all with the OMM surface, there is a high probability that it does not belong to the object category associated with the OMM surface. Part of the identity of the object may also be based on information of what object category the object does not belong to.

Further, the type and length of the modified object movement may reveal more about the object, such as the level of expression of the molecules on the object surface interacting with the OMM surface.

According to one embodiment the device may be configured to cause modified movement of known objects carried by the flow of liquid for identifying object kinetics of the objects belonging to the object category.

The objects entering the flow channel may already be known, such that the expression of the molecules on the object surface is already known. However, the passing of the objects through the at least one zone may reveal how the objects of the category interact with the OMM surface. Thus, the motion pattern of known objects may be revealed by passing them through the flow channel.

Moreover, the device may be configured to cause modified movement of known objects carried by the flow of liquid for identifying the molecules covering the OMM surface. If an object having known molecules expressed on the object surface binds and releases from the OMM surface, the molecules covering the OMM surface can be identified as molecules binding to the known molecules of the object surface.

According to one embodiment the at least one zone of the flow channel may comprise at least a first zone and a second zone, wherein a composition of the molecules coating the at least one OMM surface of the first zone may differ from a composition of the molecules coating the at least one OMM surface of the second zone.

Within the flow channel the second zone may be arranged downstream from the first zone.

Several zones with different OMM surfaces may enable characterization of the objects into multiple object categories. Further, the object characterization may be more accurate. The combination of information regarding the modified movements of objects in different zones may enable complex analysis and characterization of the objects.

The device may further be configured to detect a first and a second movement of an object, the first movement being in the first zone of the flow channel and a second movement being in the second zone of the flow channel, wherein at least one of the first and second movement is a movement modified by a OMM surface of the first or second zone. This may further improve the characterization of the objects, combining the modified movements from the at least two zones.

Several zones with different OMM surfaces may enable characterization of the objects into sub-categories. In one example OMM surfaces of the first zone are coated by molecule A for detection of objects belonging to object category A and OMM surfaces of the second zone are coated by molecule B for detection of objects belonging to object category B. Objects exhibiting modified movements in the first zone may then be categorized as belonging to object category A. Objects exhibiting modified movements in the second zone may then be categorized as belonging to object category B. Objects exhibiting modified movements in both the first and second zone may then be categorized as belonging to object sub-category AB. Object sub-category AB may be a sub-category of both object category A and object category B.

It should be understood that the at least one zone may comprise three, four, five or even more zones. The complexity of the device may be decided by the application it is to be used for.

It should further be understood that each of the zones may be associated with a plurality of object categories. Thus, a combination of at least two zones may be able to categorize into more than two object categories.

According to one embodiment, the device being configured to modulate the force exerted on the objects may comprise that the device is configured to modulate a speed of the continuous flow of liquid, wherein the object in the first condition is subject to a first speed of the flow of liquid and wherein the object in the second condition is subject to a second speed of the flow of liquid, wherein the second speed is higher than the first speed.

By modulating the speed of the continuous flow, the probability of binding and releasing of the bonds between the molecules on the surface of the object and the OMM surface can be modulated. Several forces are naturally acting on the objects while flowing through the flow channel. The forces may be beneficial for the binding or the releasing of the object to and from the OMM surface.

Drag forces of the flow allows object to move along the flow. The drag forces may exert a force on the object such that the object moves fast or slow along the flow channel. Modulating the speed of the flow may modulate the drag forces such that in the first condition the speed of the liquid is low, such that the speed of the object is low, increasing the probability of the object to bind to the OMM surface. In the second condition, the speed of the liquid is higher, and the drag forces may increase the probability of the objects to release form the OMM surface.

Viscous drag forces depend on the difference between the speed of the object and the speed of the liquid. When the object is not bound to the surface and free to move with the liquid, viscous forces quickly accelerate or decelerate the object. The speed of the flow and the speed of the object may become very similar, and the viscous forces may become very small. However, the viscous forces increase while an object has bound, fully or partly, to the OMM surface, as that increases the difference in speed between the object and the OMM surface. Modulating the speed of the liquid may modulate the viscous drag forces, such that during the first condition they are low enough to allow binding of the object to the OMM surface, but in the second condition are large enough to increase the probability of release of the binding between the object and the OMM surface.

Hydrodynamic lift forces arise e.g. when an object is moving parallel to a nearby surface, and can be directed away from or towards the surface. If the OMM surface is arranged at the bottom part of the flow channel, the hydrodynamical forces may reduce the probability of the object reaching the OMM surface and thereby reducing the probability of binding between the object and the OMM surface. Thus, reducing the hydrodynamic lift forces during the first condition may increase the probability of binding between the object and the OMM surface.

The modulation of the force exerted on the objects may comprise that the device is configured to modulate the speed of flow of liquid of the flow channel, for instance a valve or pump may be used to modulate the speed of the flow of liquid through the flow channel. As an example, the speed of the continuous flow may be modulated by fluidic bypasses comprised in the at least one flow channel.

According to one embodiment the modulation of the force exerted on the object may be pulsed.

For instance, the modulation of the speed of the flow of liquid may be pulsed.

Thus, a change of the force may be provided as a pulse changing the force, such as the speed of the flow of liquid, for a duration of time. The flow of liquid may for instance be modulated to have the first speed during the pulse or to have the second speed during the pulse.

Thus, the device may be configured to exert the first condition and/or the second condition on the object during a short period of time.

For instance, a pulsed modulation of the speed may cause the flow of liquid to have the second speed for a short period of time. This may allow the objects being bound to the OMM surface to release from the OMM surface. Further, the second speed of the flow of liquid may be applied during such a short period of time that objects entering the zone will not pass through the entire zone during the period of time of the pulsed modulation, such that these objects are still able to bind to the OMM surface.

By modulating the speed in a pulsed manner, a large increase in speed may be acquired such that a large force is exerted on the objects. This may be advantageous for objects having a strong binding to the OMM surface, as the pulse may apply a strong enough force to release the binding while it still does not keep the forces high during a long period and thus a new binding may be favorable.

According to one embodiment the modulation of the force exerted on the object may be periodic.

For instance, the modulation of the speed of the flow of liquid may be periodic,
Having a period modulation of the force may be advantageous for promoting both binding and release as the force may be as low as needed and as high as needed for promoting binding and release, respectively, in a periodic manner. Moreover, an object may have several periodic cycles while passing through the zone, such that it has several times to bind and release to and from the OMM surface.

The period may be chosen such that it is certain that the object will go through at least one, at least two or at least three periods while passing though the at least one zone. In that way, the object may experience a predetermined number of time periods during which the object may interact with the OMM surface.

According to one embodiment the modulation of the force exerted on the object may have a varying amplitude.

For instance, the speed of the flow of liquid may have a varying amplitude.

A varying amplitude may be advantageous when having objects belonging to different object categories of having different affinity to the OMM surface, as the amplitude used for release of an object of a first object category may not be enough for the release of an object of a second object category. When varying the amplitude, a plurality of objects belonging to the same or different categories may have a good probability of binding and releasing while passing through the at least one zone.

It should be realized that the modulation may not necessarily be a periodic modulation. Rather, the amplitude should be understood as a peak value of the modulation of the speed, which may be modulated by applying a plurality of spikes with varying amplitude (peak value) or in any other manner.

According to one embodiment the device may further comprise a detector configured to detect an object exhibiting at least one modified movement in one zone of the flow channel.

The detector may be configured to detect one modified movement of an object in a zone, e.g. one bind and release event, a halt of motion, a change of speed, a change of direction, a change of path, or a change in morphology, and thereby identify the object as belonging to the object category associated with the zone. Alternatively, the detector may be configured to detect a threshold number of modified movements of an object in a zone, e.g. the object displaying at least 2, at least 5, or at least 10 bind and release events within the zone, and thereby identify the object as belonging to the object category associated with the zone.

According to one embodiment the detector may further comprise a light source configured to illuminate an object in the flow channel such that an interference pattern is formed by interference between light being scattered by the illuminated object and non-scattered light from the light source and an image sensor configured to detect an image series that represents a time-sequence of interference patterns of the illuminated object.

Such a detector may enable a high object throughput. A detector operating according to the principles of digital holographic imaging may have a large field of view since a lens may not be needed between the image sensor and the flow channel. Further, a detector operating according to the principles of digital holographic imaging may have a large depth of focus. Consequently, the detector may monitor a large area or a large volume, of the flow channel, for objects exhibiting modified movements. Monitoring a large area or volume simultaneously makes it possible to maintain a high flow rate or a high object throughput.

The non-scattered light from the light source may be passed along a common optical path with the light being scattered by the objects. Thus, the interference pattern may be formed between scattered and non-scattered light at the image sensor in a so-called in-line holography set-up. Thus, the scattered and non-scattered light may share the same light path. However, according to an alternative, the non-scattered light may be passed along a separate reference light path, which is combined with the light having been scattered by the objects before reaching the image sensor. In such case, the light scattered by the objects may be either forward or backward scattered light.

As an alternative to a detector operating according to the principles of digital holographic imaging, the detector may use imaging with a lens to detect objects exhibiting modified movements. Thus, the detector may detect an image series representing a time-sequence of an object in the flow channel instead of a time-sequence of interference patterns of the object.

The detector may further comprise a processor configured to process the information of the interference patterns, to characterize or identify the objects in each of the detected images.

The image sensor may be configured to detect an image series or video representing a time-sequence of interference patterns of the illuminated object, wherein the image series represent the illuminated object in the at least one zone of the flow channel.

It should be understood that the detector may comprise multiple image sensors. The multiple image sensors may image a larger area than a single image sensor could. Each image sensor may have its own light source. Alternatively, two or more image sensors may share a light source. The field of view of an image sensor may or may not overlap with the field of view of another image sensor.

When the detector comprises a light source, configured to illuminate an object in the flow channel, and an image sensor configured to detect an image series representing a time-sequence of interference patterns of the illuminated object, the light source may be configured to emit at least partially coherent light. Coherent light may be advantageous as it may improve the interference visibility. A coherent light source may be a laser. However, it should be understood that also partially coherent light may provide an interference pattern with sufficient visibility. A partially coherent light source may e.g. be a light emitting diode which emits light directly onto the flow channel or through a pinhole onto the flow channel. A coherent light source may provide better interference visibility but be more expensive while a partially coherent light source may provide a worse interference visibility but be less expensive.

According to one embodiment the flow channel may have a varying cross section of the at least one zone, such that a speed of the object is modulated by the change of cross section.

The object may have a modulated speed depending on the cross section of the at least one zone as the liquid carrying the object may have a different flow behavior when the cross section of the at least one zone changes. For the same volume of liquid, a broader width of the cross section may give a lower speed of the liquid and thereby a lower speed of the objects. Similarly, a smaller width may increase the speed of the liquid and thereby the objects.

The flow rate, may be modulated in combination with a flow channel having different cross sections of the at least one zone. Thus, the speed of the flow of liquid may change depending on a combination of the modulation of the flow rate and the change of the cross section. Having a larger cross section may give a smaller change in the speed of the flow of liquid compared to a smaller cross section, for the same change of flow rate.

The flow channel may comprise movable walls, such that the speed of the liquid may be modulated by changing the cross section of the at least one zone. Thus, having movable walls of the flow channel may exert forces on the objects by changing the cross section of the at least one zone such that the space for the liquid carrying the at least one object changes and the liquid may exert different forces on the at least one object.

According to one embodiment the device may further comprise an actuator configured for modulate a force exerted on the object.

The actuator may for instance be configured for modulating the speed of the flow of liquid.

The actuator may comprise an external actuator which may be any kind of external actuator configured to affect the force exerted on the object. Given purely as non-limiting examples, the external actuator may be a syringe pump, pressure-based pump, jet-pumps, diffuser pumps, squeeze film pumps, peristaltic pumps, hydraulic ram pumps, vortex pumps, capillary pumps, electroosmotic pumps, acoustic pumps or, peristaltic pump. The actuator may further comprise an in-channel integrated actuator, such as an actuator changing the cross-section of the flow channel or an actuator being configured for applying electrophoretic forces, dielectrophoretic forces, optical forces, acoustic forces, magnetic forces on the object.

The actuator may drive the flow speed by electro-osmosis.

The actuator may modulate the force using a mathematical expression describing the force as a waveform, such as a smooth function, stepped function, a piecewise linear function or a sampled or digitalized function, as an example, the function may be a sinusoidal, square, or linear; as a stochastic function or a combination thereof.

According to one embodiment the modulation of the speed may be configured such that an object passing though the at least one zone of the flow channel is exposed to a cycle of speed modulations while passing the at least one zone of the flow channel.

Each object should spend a minimum of time in each of the at least one zones to have time to bind to the OMM surface, if the object belongs to the associated object category of the OMM surface.

A cycle of speed modulations implies a duration of time during which the speed is modulated from a first value, such as the first speed, to a second value, such as the second speed, and back again to the first value. The speed modulation may be periodic, in which case the cycle of speed modulations corresponds to a full period of the periodic modulation.

It should be understood that the modulation may not always return the modulated speed to the first value, but the modulation may vary the speed in multiple ways where a range of speed are accounted as the first condition and another range of speed are the second condition.

It is an advantage if each object passing the at least one zone experiences at least one cycle of speed modulations, such that each object is subject to at least the first speed and the second speed while passing through the at least one zone. This promotes both binding and releasing of each object passing through the zone, such that all objects belonging to the object category may have a probability larger than a threshold probability of binding and releasing to the OMM surface. The threshold probability may be 50 %, 90 %, 95 %, 99 % or 99.9 % probability of an object belonging to the object category to bind and release to and/or from the OMM surface.

It should be understood that, similarly to modulating the speed to a first speed and a second speed in order to modulate the hydrodynamic forces such as drag force and lift force exerted on the object, other forces may be modulated into a first and a second value. Such as modulating an ultrasound or optical forces or electrokinetics into a first value and a second value.

According to one embodiment the device may further comprise a tracker configured to track the detected object in the flow channel.

The tracker may be configured to monitor the position of a detected object in the flow channel over a time-sequence at least from the detection of the object exhibiting the modified movement until the object reaches the end of the flow channel. The tracker may monitor the position of the detected object from a position of the flow channel before the at least one zone, such as from the start of the flow channel. The tracker may be a processor monitoring the position of a detected object based on information from an image sensor, e.g. an image sensor part of a digital holographic system.

The tracker may acquire information of a processor, to analyze the time-sequence of interference patterns of the illuminated object and detect the object as exhibiting the at least one modified movement based on the time-sequence of interference patterns. The tracker may further process the information from the processor to characterize and/or identify the objects.

Thus, the use of a tracker allows a modified movement of an object to be detected. The device may for instance further comprise a sorting actuator for sorting objects based on the characterization. The tracker allows the modified movement of the object to be detected at a distance from the sorting actuator.

The detector may be configured to monitor a large area or a large volume, of the flow channel, for objects exhibiting modified movements. This implies that the tracker may receive input relating to a large area or large volume such that a high object throughput may be achieved.

Further, the characterization may be even more accurate when the device comprises a tracker. When the object is tracked, several modified movements may be used to accurately identify an object as belonging to a category. For example, when an object exhibits two modified movements within a zone it may be more probable that the object belongs to the object category associated with the zone than if the object only exhibits one single modified movement within the zone. Tracking may enable counting of a number of modified movements an object exhibits. Tracking further enables a path of the object to be monitored. This may further allow for analysis of the object kinetics.

According to a second aspect, there is provided a method for characterizing objects comprising:
providing a continuous flow of liquid carrying objects in a flow channel, wherein;
   the flow channel comprises at least one zone,
   each zone of the flow channel is associated with an object category, and
   each zone of the flow channel comprises at least one surface coated with molecules having an affinity and specificity to the object category associated with the zone, the at least one surface of the zone being configured to modify, by the molecules coating the at least one surface, a movement of an object belonging to an associated object category of the zone as the object, carried by the flow of liquid, passes the zone, whereby the at least one surface forms at least one object movement modifying (OMM) surface, wherein the at least one OMM surface of at least one zone of the flow channel is configured to modify the movement of the object belonging to the associated object category of the zone by binding and releasing the object belonging to the associated object category of the zone; and
modulating a force exerted on the object for exerting a first condition and a second condition on the object, the first condition being adapted to promote the binding of an object belonging to the object category to the OMM surface and the second condition being adapted to promote the releasing of an object bound to the OMM surface.

This aspect may generally present the same or corresponding advantages as the former aspect.

In the continuous flow of liquid, the objects move in a continuous speed through the flow channel. However, the continuous speed may be less favorable for binding or release of the object to the OMM surface.

It is a realization that modulating the force exerted on the objects such that a condition exerted on the objects are modulated between a first and a second condition increases the probability of binding and releasing the molecules on the object surface to the molecules on the OMM surface.

The first condition may be a first speed of the flow of liquid carrying the objects. The second condition may be a second speed of the flow of liquid.

Thus, the first speed may then promote binding of the molecules on the object surface to the OMM surface. The first speed may allow the object to have significant probability to interact with the OMM surface. A too slow speed may allow the objects to settle at the bottom of the flow channel even before reaching the zone comprising the OMM surface, such that the objects do not properly reach or interact with the OMM surface. A too fast speed may on the other hand force the objects through the at least one zone at a speed where there is insufficient time or where the binding on-rate is too small for interaction between the molecules on the object surface and the molecules on the OMM surface.

The second speed may then promote release of the binding between the molecules on the object surface and the OMM surface. When bound to the surface, a certain force may be needed to release the binding.

The first condition and the second condition exerted on the objects may further include forces based on ultrasound, optical modulation, or by the use of electrokinetics, such as dielectrophoresis (DEP) on the objects.

It is a realization that a method according to the second aspect, modulating of the forces exerted on the object gives an accurate method for characterizing objects. The binding to the OMM surface is an important factor in the characterization of the object and thus improving this allows for a more accurate method.

### Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.
Fig. 1 is a device for characterizing objects.
Fig. 2 is a flow chart for a method for characterizing objects.

### Detailed description

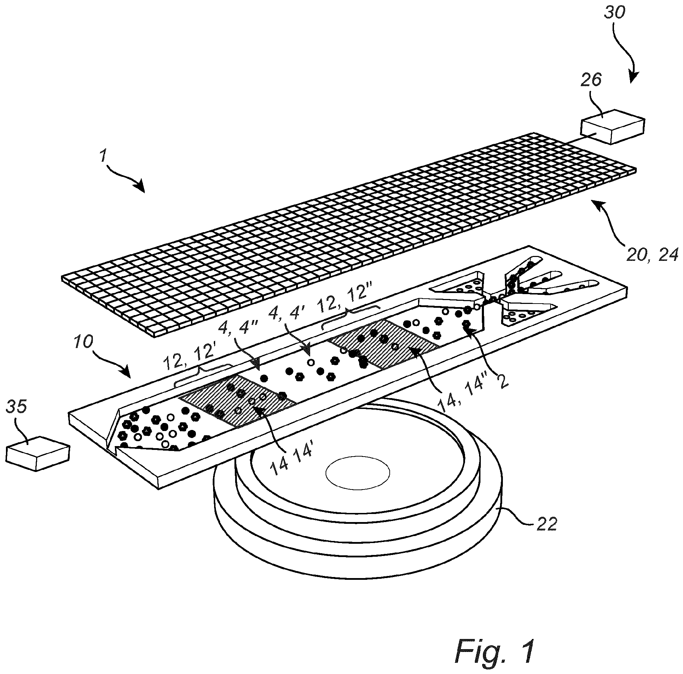

Fig. 1 illustrates a device 1 for characterizing objects 4 comprising a flow channel 10 configured to pass a continuous flow of liquid 2 carrying the objects 4 to be characterized. The objects 4 may be biological cells, biological objects such as extracellular vesicles such as exosomes and/or other lipid nanoobjects or synthetic (bio)objects displaying specific antigens/receptors e.g. used for drug delivery.

The flow channel 10 may be a microfluidics channel. The flow channel 10 may be defined in any manner, such as using conventional manufacturing technology, for example involving lithography. The flow channel 10 may for instance be formed in a suitable material, which may be transparent to wavelengths used in detecting objects 4 in the flow channel 10. The flow channel 10 may for instance be formed in glass, polydimethylsiloxane (PDMS), or polycarbonate. The top part of the flow channel 10 may be formed by a cover slide, e.g. a glass slide, bonded to the PDMS.

The flow channel 10 comprises at least one zone 12. The illustrated flow channel 10 comprises two zones 12. The flow of liquid 2 and the objects 4 first passes a first zone 12' and then a second zone 12". Each zone 12, 12', 12" comprises at least one surface 14, 14', 14" coated with molecules having an affinity and specificity to an object category, such that each zone 12, 12', 12" of the flow channel is associated with an object category.

If the flow channel 10, as in Fig. 1 comprises a plurality of zones 12', 12", the zones 12', 12" may be arranged with or without a space in-between the zones 12', 12". In other words, the second zone 12" may be arranged in close proximity to the end of the first zone 12' or the second zone 12" may be arranged at a distance from the first zone 12'.

The object category may be determined by the molecules they comprise such as the molecules they comprise at the surface of the object. For instance, biological cells may be characterized by the cell membrane of the biological cell 4. Thus, the objects 4 may be characterized by the association to at least one object category or the association to no object category associated to the device 1. Molecules comprised in the object surface may e.g. be antigens, proteins, peptides, polysaccharides, lipids, or nucleic acids.. A way of checking whether an object comprises a certain object surface molecule may be to let the object interact with a molecule that binds specifically to said object surface molecule. For example, an antigen comprised in the cell membrane, i.e., the cell surface of a biological cell, may correspond to one or more antibodies, where the antigen and antibody bind specifically to each other. Consequently, objects may be divided into object categories depending on which object surface molecules they comprise or which molecules the objects bind to.

At least one surface 14' of the first zone 12' and at least one surface 14" of the second zone 12" is configured to modify, by the molecules coating the at least one surface 14', 14", a movement of an object 4 belonging to an associated object category of the zone 12 as the object, carried by the flow of liquid 2, passes the zone 12. Thus, during their travel through the flow channel 10, the object 4 may repeatedly hit the at least one surface 14, 14', 14" of the at least one zone 12, 12', 12". When the object 4 hits the surface 14, 14', 14", the molecules on the object surface may interact with the at least one surface 14, 14', 14".

The molecules coating the at least one surface 14' of the first zone 12' may differ from the molecules coating the at least one surface 14" of the second zone 12". The first zone 12' and the second zone 12" may be associated with different object categories or the same object category. A zone 12 may be associated with more than one object category, such as two or three categories. A first and a second category may for instance differ in the affinity to the molecules of the OMM surface. Thus, by the coating with a single molecule several categories may be identified. Moreover, the zone 12 may comprise several different molecule comprised in the OMM surface 14, such that different molecules on the object surface may interact with the OMM surface.

As an example, when an object 4 is passing through the flow channel 10, it may interact with the at least one surface 14' in the first zone 12' but not with the at least one surface 14" in the second zone 12". Alternatively, the object 4 passing through the flow channel 10 may not interact with the at least one surface 14' of the first zone 12", but interact with the at least one surface 14" of the second zone 12". The object 4 passing through the flow channel 10 may as an alternative interact with the at least one surface 14' of the first zone 12' and with the at least one surface 14" of the second zone 12". In other words, the first zone 12' may be associated with a first object category and the second zone 12" may be associated with a second object category 12". An object 4 may be characterized to belong to the first object category, the second object category, both the first and the second object category or no object category.

The molecules of the OMM surfaces 14 may be e.g. antibodies, aptamers, lectins, nanobodies, aptamers, lectins, receptors, antigens or molecularly imprinted polymers (MIPs). For example, the molecules of the OMM surface 14' of the first zone 12' may be anti-CD4 antibodies and the molecules of the OMM surface 14" of the second zone 12" may be anti-CD8 antibodies. Thus, a first object category may be defined as cells 4' having a cell membrane comprising CD4 antigens and a second cell category may be defined as cells 4" having a cell membrane comprising CD8 antigens.

Each zone may comprise obstacles. The obstacles may be in the form of pillars. In such a case, the at least one surface 14 of the zone may be comprised on the obstacles, such as on the walls of pillars.

The at least one surface 14, 14', 14" forms at least one object movement modifying (OMM) surface 14, 14', 14". The at least one OMM surface 14, 14', 14" of at least one zone 12, 12', 12" of the flow channel 10 is configured to modify the movement of the object 4 belonging to the associated object category of the zone 12, 12', 12" by binding and releasing the object 4 belonging to the associated object category of the zone 12, 12', 12".

It should be understood that the binding and release of the object 4 belonging to the associated object category may be made through interactions between several molecules on the OMM surface 14 and several molecules on the surface of the object 4. As such, the binding and releasing of the object 4 may be made stepwise, such that, for example, a plurality of molecules on the surface of the object 4 binds to a plurality of molecules om the OMM surface 14. While releasing the interactions, not all interactions are released at the same time and the object 4 may be deformed by this. This kind of bind and release interaction may be used to characterize if the object 4 belong to an object category with a relatively high expression of a surface molecule or an object category with a relatively lower expression of the surface molecule.

The modified movements may be expressed as objects 4 taking a characteristic type of path or moving at a slower speed if they interact with the OMM surfaces 14 of a zone 12. In Fig. 1 an object 4' of the first category has a slower movement through the first zone 12' than in the second zone 12". Analogously, an object 4" of the second category has a slower movement through the second zone 12" than in the first zone 12'.

The molecules may bind and release an object 4 belonging to the associated object category of the zone 12. For example, an anti-CD4 antibody may bind to a cell 4 having a cell membrane comprising CD4 antigens, and subsequently release the cell. Thus, the movements of a cell 4' of the first category moving through the first zone 12' may change in a characteristic way that makes it possible to identify the cell as belonging to the first category. The movements of an object 4" of the second category moving through the second zone 12" may change analogously. When an object 4 belongs to a category associated with a zone 12 the object 4 may, in that zone 12, exhibit e.g. a bind and release event, a halt of motion, a change of speed, a change of direction, or a change of path. For example, an object 4 that is observed to stick for a short time to a pillar in the first zone 12' may be regarded as an object 4' of the first category. Alternatively, an object that is observed to stick for a short time to a threshold number, e.g. 10, of pillars in the first zone 12' may be regarded as an object 4' of the first category. In another example, objects that exhibit bind-roll-release type of movements in the first zone 12' may be regarded as an object 4' of the first category.

A modified movement may be detected at a specific location of the zone 12, e.g. the object 4 moving slower over the OMM surface 14 of the zone 12 or moving in a characteristic way through the OMM surface 14. Alternatively, a modified movement may be detected over the entire zone 12 or over an area of the zone 12, e.g. the object 4 taking an undulating path when interacting with several obstacles of the zone 12 or having a slower movement through the entire zone.

The device 1 is further configured to modulate a force exerted on the object 4. When moving through the flow channel 10, the object 4 is subject to different forces, such as the force from the liquid 2 carrying it and the force of gravity. Those forces act on the object and may affect the object movement through the flow channel 10 and its possibilities and probabilities to interact with the at least one surface 14 of the zone 12. The modulation of the force exerted on the objects 4 may comprise modulating the speed of the continuous flow of liquid 2. Thus, the speed of the continuous liquid 2 may be modulated such that the speed of the liquid providing a force acting on the object 4 is differing. The device 1 may comprise an actuator 35 configured for modulating force exerted on the object 4. For instance, the actuator may modulate the speed of the flow of liquid 2.

The device 1 is further configured to, by modulating of the force, exert a first condition and a second condition on the object 4. The first condition being adapted to promote the binding of an object belonging to the object category to the OMM surface 14, 14', 14". Thus, the first condition is such that the binding of the object 4 to the OMM surface 14 is promoted, i.e. that the object 4 has a high probability to interact with the OMM surface 14. The second condition is adapted to promote the releasing of an object bound to the OMM surface 14, 14', 14". Thus, the second condition exerts a force on the object 4 such that the probability to release the binding to the OMM surface 14 is increased.

The first condition may be a first speed of the flow of liquid carrying the object 4. The second condition may be a second speed of the flow of liquid.

The speed of the object 4 carried by the flow of liquid may thus also be modulated between a first and a second speed. The first speed being adapted to promote the binding of an object belonging to the object category to the OMM surface 14, 14', 14" and the second speed adapted to promote the releasing of an object bound to the OMM surface 14, 14', 14". When travelling through a zone 12, the speed of the object 4 affects the probability of the object 14 to bind to the OMM surface 14. Thus, having a first speed adapted to promote binding and a second speed adapted to promote release of the object binding may be advantageous. The first speed is slower than the second speed, as the probability of binding of the object 4 to a OMM surface 14 may be dependent on a proximity of the object 4 to the molecules of the OMM surface 14 and a time during which the object 4 is close to the molecules of the OMM surface 14. Having a slower speed may allow the object to move towards the bottom of the flow channel 10. In other words, the slow speed provides less lift forces applied to the object 4. This is advantageous if the OMM surface 14 is comprised at the bottom of the zone 12. The release of the object 4 from the binding requires a larger force and thus a higher speed.

The first condition may further comprise a first speed of the flow of liquid 2 and the second speed may comprise a second speed of the flow of liquid 2. By changing the speed of the flow of liquid 2, the speed of the objects 4 may also change. Further, as the objects 4 are carried by the flow of liquid 2 the speed of the liquid 2 itself may create a force exerted on the objects 4.

The first condition and the second condition may further comprise modulating ultrasound waves through the flow channel 10. Thus, ultrasound waves may be turned on and off in the second and first condition, respectively, or vice versa. Alternatively, the first and the second condition may comprise variations of the force exerted on the objects 4 by the use of optical forces, such as optical tweezers, or by the use of electrokinetics, such as dielectrophoresis.

The modulation of the conditions between the first and second condition may be pulsed, periodic and/or have a varying amplitude. The modulations of the conditions have a stepwise transition or a smooth continuous transition between the conditions. Thus, the modulation of the conditions may be adapted to the specific application. Objects 4 may need longer or shorter periods of interaction to bind to a OMM surface 14. Likewise, an object 4 may need a larger force or a force during a longer time to release from a OMM surface 14. This may be part of the characterization, as for instance the force required for releasing the object 4 from the OMM surface 14 may indicate how strong the affinity is for the molecules on an object surface to bind to the OMM surface 14 or how large the level of expression of the molecules on the object surface is. The modulation of the condition may be configured such that an object 4 passing though the at least one zone 12, 12', 12" of the flow channel 10 is exposed to a cycle of modulation of the condition while passing the at least one zone 12, 12', 12" of the flow channel 10. Thus, if an object 4 traveling at the second speed needs 10 seconds to pass a zone 12, the modulation of the conditions may be set to exert the first condition on the object during 5 seconds followed by exerting the second condition on the object during 5 seconds. It should be realized that the time of modulation may differ between the first and the second condition. This allows for the object 4 to reach both conditions during the passage through the zone 12.

The flow channel 10 may have a varying cross section of the at least one zone 12, 12', 12", such that the speed of the object 4 may be modulated by the change of cross section. The object 4 may have a modulated speed depending on the cross section of the at least one zone 12 as the liquid 2 carrying the object 4 may have a different flow behavior when the cross section of the at least one zone 12 changes. For the same volume of liquid 2, a broader width of the cross section may give a lower speed of the liquid and thereby a lower speed of the objects 4. Similarly, a smaller width may increase the speed of the liquid and thereby the objects 4.

The flow channel 10 may comprise movable walls, such that the speed of the objects 4 may be modulated by changing the cross section of the at least one zone 12. Thus, having movable walls of the flow channel 10 may exert forces on the objects 4 by changing the cross section of the at least one zone such that the space for the liquid 2 carrying the at least one object 4 changes and the liquid may exert different forces on the at least one object 4.

The device 1 may further comprise a detector 20 configured to detect a object 4 exhibiting at least one modified movement in one zone 12, 12', 12" of the flow channel 10.

The detector 20 may be used to detect the modified movement, such that the object 4 can be characterized based on the detection.

The detector 20 may further comprise a light source 22 configured to illuminate an object 4 in the flow channel 10 such that an interference pattern is formed by interference between light being scattered by the illuminated object 4 and non-scattered light from the light source 22.

The illustrated light source 22 is configured to illuminate the objects 4 as they pass through the flow channel 10. The light source 22 may herein be a coherent light source 22, e.g. a laser, or a partially coherent light source 22, e.g. a light emitting diode or a light emitting diode with a pin hole or aperture. As the objects 4 are illuminated an interference pattern is formed on the image sensor 24, comprised in the detector 20. The image sensor 24 may comprise a plurality of photo-sensitive elements configured to detect incident light. The image sensor 24 may herein be a CCD or CMOS sensor. The image sensor 24 may acquire a time-sequence of image frames of the changing interference pattern as objects 4 pass the image sensor 24. In the figure the light source 22 and the image sensor 24 are arranged on opposite sides of the flow channel 10. The flow channel 10 is herein at least partially transparent to the wavelengths of light emitted by the light source 22 such that the light may travel through the flow channel 10.

The illustrated detector 20 further comprises a processor 26 which may process the information acquired from the image sensor 24. The processor 26 may e.g. perform a holographic reconstruction of two interference patterns in the time-sequence of interference patterns. The information may for instance comprise information on the positioning of the objects 4 in the time-sequence of image frames.

The processor 26 may not necessarily perform a full holographic reconstruction of two interference patterns in the time-sequence of interference patterns. The object 4 may be detected as exhibiting a modified movement based on two, or more, interference patterns in the time-sequence of interference patterns or partial holographic reconstructions of the two, or more, interference patterns.

The processor 26 may be a central processing unit (CPU) or a graphics processing unit (GPU), which may execute the instructions of one or more computer programs in order to provide desired functionality.

The processor 26 may alternatively be implemented as firmware arranged e.g. in an embedded system, or as a specifically designed processing unit, such as an Application-Specific Integrated Circuit (ASIC) or a Field-Programmable Gate Array (FPGA), which may be configured to implement desired functionality.

The processor 26 may be arranged in a common housing with the image sensor 24 and may be configured to receive the interference patterns in the time-sequence of interference patterns directly from the detector 20 for performing a holographic reconstruction. However, according to an alternative, the interference patterns in the time-sequence of interference patterns may be communicated through wired or wireless communication to the processor 26. Thus, the processor 26 may be physically arranged anywhere in relation to the image sensor 24, such as being arranged in a server "in the cloud".

The processor 26 may be connected to the actuator 35, such that the modified force exerted on the objects 4 is controlled from the processor 26. The processor may also receive information on the force exerted on the objects 4.

The device 10 may further comprise a tracker 30 configured to track the detected object 4 in the flow channel 10. The tracker 30 acquires information from the detector 20, such as acquiring information from the imaging sensor 24 processed by the processor 26 to track an object 4 through the at least one zone 12. The tracker 30 may for instance follow the position of the object 4 through the flow channel 10, based on the time-sequence of interference patterns of the illuminated object 4. The tracker 30 may track the object 4 based on holographic reconstructions from the processor 26 of the time-sequence of interference patterns, or based on partial holographic reconstructions of the time-sequence of interference patterns, or based on the interference patterns without any reconstruction.

For example, a reconstruction made by the processor 30 of information from the imaging sensor 24 may depict e.g. an object in contact with a OMM surface 14 in two reconstructed images. To show if both reconstructed images show the object 4 at the same location the tracker 30 may be used. It may then be deduced that the object is stuck to the OMM surface and therefore has an affinity to the OMM surface 14. If both reconstructed images show the object 4 in contact with the OMM surface but at different locations, it may be deduced that the object has stuck to the OMM surface 14 and thereafter rolled along the OMM surface 14. In either case, the object 4 may be detected as exhibiting a modified movement.

The tracker 30 may further detect a first and a second movement of an object 4, the first movement being in the first zone 12' of the flow channel 10 and the second movement being in the second zone 12" of the flow channel 10. For example, in Fig. 1 an object 4' of a first category may exhibit an undulating path in the first zone 12' and a fairly straight path in the second zone 12". The processor 26 may then categorize the object as belonging to the first category but not the second category. The characterization may then be based on the detection of the object exhibiting the first and second movement. The object 4 may be tracked between the detection of the first movement and the detection of the second movement.

The device 1 may be configured to cause modified movement of the objects 4 carried by the flow of liquid 2 for identifying the object category to which the objects 4 belong.

The objects 4 entering the flow channel 10 are unknown and the known OMM surface 14 may reveal the identity of the objects 4. When entering the at least one zone 12, the device 1 may reveal if the objects are interacting by binding and releasing from the OMM surface 14. If the object 4 is binding and releasing from the OMM surface 14, the object is categorized as belonging to the object category associated with the OMM surface 14 and the object 4 is identified. If the object 4 does not interact at all with the OMM surface 14, it does not belong to the object category associated with the OMM surface 14. That is also part of the identity of the object 4 to know what object category it does not belong to.

Further, the type and duration of binding to the OMM surface 14 may reveal more about the object 4, such as the level of expression of the molecules on the object surface interacting with the OMM surface 14.

The device 1 may be configured to cause modified movement of known objects 4 carried by the flow of liquid 2 for identifying object kinetics of the objects 4 belonging to the object category.

The objects 4 entering the flow channel 10 may already be known, such that the expression of the molecules on the object surface is already known. However, the passing of the objects 4 through the at least one zone 12 may reveal how the objects 4 of the category interact with the OMM surface 14. Thus, the motion pattern of known objects 4 may be revealed by passing them through the flow channel 10. This may further be used for later characterizing unknown objects 4 being passed through the flow channel 10.

Moreover, using known objects 4 may also allow identifying the molecules covering the OMM surface 14. If an object 4 having known molecules expressed on the object surface binds and releases from the OMM surface 14, the molecules covering the OMM surface 14 can be identified as molecules binding to the known molecules of the object surface.

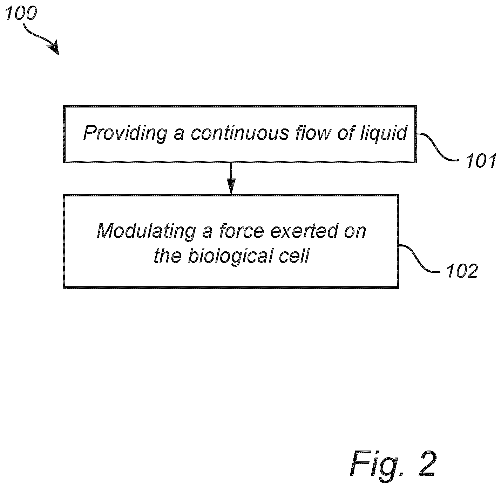

Fig. 2 illustrates a flow chart of a method 100 for characterizing objects 4. The method 100 comprises providing 101 a continuous flow of liquid 2 carrying objects 4 in a flow channel 10. The flow channel 10 comprises at least one zone 12, 12', 12". Each zone 12, 12', 12" of the flow channel 10 is associated with an object category. Further, each zone 12, 12', 12" of the flow channel 10 comprises at least one surface 14, 14', 14"coated with molecules having an affinity and specificity to the object category associated with the zone 12, 12', 12". The at least one surface 14, 14', 14" of the zone 12, 12', 12" is configured to modify, by the molecules coating the at least one surface, a movement of an object 4 belonging to an associated object category of the zone 12, 12', 12" as the object 4, carried by the flow of liquid 2, passes the zone 12, 12', 12". The at least one surface 14, 14', 14" forms at least one object movement modifying (OMM) surface 14, 14', 14". The at least one OMM surface 14, 14', 14" of at least one zone 12, 12', 12" of the flow channel 10 is configured to modify the movement of the object 4 belonging to the associated object category of the zone by binding and releasing the object 4 belonging to the associated object category of the zone 12, 12', 12".

The method 100 further comprises modulating 102 a force exerted on the object 4 for exerting a first condition and a second condition on the object 4. The first condition being adapted to promote the binding of an object belonging to the object category to the OMM surface 14, 14', 14". The second condition being adapted to promote the releasing of an object bound to the OMM surface 14, 14', 14".

The first condition promotes binding of the object 4 to the OMM surface 14. Thus, it increases the probability of the binding to occur by providing the object 4 with a sufficient probability to bind to the OMM surface 14. In other words, the forces acting on the object 4 may be low. Moreover, the second condition promotes release of the object from the OMM surface 14. Thus, it increases the probability of a release of the object 4 from the surface 14. The forces acting on the objects 4 may be higher or different than in the first condition.

However, it should be understood that for certain application, the first condition may require higher forces than the second condition.

The first condition may be a first speed of the flow of liquid carrying the object 4. The second condition may be a second speed of the flow of liquid.

The first speed may promote binding of the molecules on the object surface to the OMM surface 14. Thus, the first speed allows the object 4 to move towards the bottom of the surface 14 and allowing the object 4 to have significant probability to interact with the OMM surface 14. A too slow speed may allow the objects 4 to settle at the bottom of the flow channel 10, such that the objects 4 do not reach the zone 12 with the OMM surface 14 and do not properly reach or interact with the OMM surface 14. A too fast speed may on the other hand force the objects 4 through the at least one zone 12 at a speed where there is no time for interaction between the molecules on the object surface and the molecules on the OMM surface 14.

The second speed may promote release of the binding between the molecules on the object surface and the OMM surface 14. When bound to the surface 14, a certain force may be needed to release the binding.

The method 100 may be performed using one of the devices 1 described above. For example, the method 100 may be controlled by a processor 26 in one of the devices 1 described above, controlling the continuous flow of liquid and modulation of the force exerted on the object.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A device (1) for characterizing objects (4) comprising:
a flow channel (10) configured to pass a continuous flow of liquid (2), wherein:
the flow of liquid (2) carries the objects (4),
the flow channel (10) comprises at least one zone (12),
each zone (12, 12', 12") of the flow channel is associated with an object category, and
each zone (12, 12', 12") of the flow channel (10) comprises at least one surface (14, 14', 14") coated with molecules having an affinity and specificity to the object category associated with the zone (12, 12', 12"), the at least one surface (14, 14', 14") of the zone (12, 12', 12") being configured to modify, by the molecules coating the at least one surface (14, 14', 14"), a movement of an object (4) belonging to an associated object category of the zone (12, 12', 12") as the object (4), carried by the flow of liquid (2), passes the zone (12, 12', 12"), whereby the at least one surface (14, 14', 14") forms at least one object movement modifying (OMM) surface (14, 14', 14"), wherein the at least one OMM surface (14, 14', 14") of at least one zone of the flow channel (10) is configured to modify the movement of the object (4) belonging to the associated object category of the zone (12, 12', 12") by binding and releasing the object (4) belonging to the associated object category of the zone (12, 12', 12");
wherein the device (1) is configured to modulate a force exerted on the object (4);
wherein the device is configured to, by modulating of the force, exert a first condition and a second condition on the object (4), the first condition being adapted to promote the binding of an object belonging to the object category to the OMM surface (14, 14', 14") and the second condition being adapted to promote the releasing of an object bound to the OMM surface (14, 14', 14").

2. The device (1) according to claim 1, wherein the device (1) is configured to cause modified movement of the objects (4) carried by the flow of liquid (2) for identifying the object category to which the objects (4) belong.

3. The device (1) according to claim 1, wherein the device (1) is configured to cause modified movement of known objects (4) carried by the flow of liquid (2) for identifying object kinetics of the objects (4) belonging to the object category.

4. The device (1) according to any one of claims 1-3, wherein the at least one zone (12, 12', 12") of the flow channel (10) comprises at least a first zone (12') and a second zone (12"),
wherein a composition of the molecules coating the at least one OMM surface (14') of the first zone (12') differs from a composition of the molecules coating the at least one OMM surface (14") of the second zone (14).

5. The device (1) according to any one of claims 1-4, wherein the device being configured to modulate the force exerted on the objects (4) comprises the device being configured to modulate a speed of the continuous flow of liquid (2), wherein the object in the first condition is subject to a first speed of the flow of liquid and wherein the object in the second condition is subject to a second speed of the flow of liquid, wherein the second speed is higher than the first speed.

6. The device (1) according to any one of claims 1-5, wherein the modulation of the force exerted on the object (4) is pulsed.

7. The device (1) according to any one of claims 1-5, wherein the modulation of the exerted on the object (4) is periodic.

8. The device (1) according to any one of claim 1-5, wherein the modulation of the exerted on the object (4) has a varying amplitude.

9. The device (1) according to any one of claims 1-8, wherein the device (1) further comprises a detector (20) configured to detect an object (4) exhibiting at least one modified movement in one zone (12, 12', 12") of the flow channel (10).

10. The device (1) of claim 9, wherein the detector (20) further comprises:
a light source (22) configured to illuminate an object (4) in the flow channel (10) such that an interference pattern is formed by interference between light being scattered by the illuminated object (4) and non-scattered light from the light source; and
an image sensor (24) configured to detect an image series that represents a time-sequence of interference patterns of the illuminated object (4).

11. The device (1) according to any one of claims 1-10, wherein the flow channel (10) has a varying cross section of the at least one zone (12, 12', 12"), such that a speed of the object (4) is modulated by the change of cross section.

12. The device (1) according to any one of claims 1-10, wherein the device (1) further comprises an actuator (35) configured modulate the force exerted on the object (4).

13. The device (1) according to any one of claims 5-11, wherein the modulation of the speed is configured such that an object (4) passing though the at least one zone (12, 12', 12") of the flow channel (10) is exposed to a cycle of modulations while passing the at least one zone (12, 12', 12") of the flow channel (10).

14. The device (1) according to any one of claim 1-13, wherein the device (1) further comprises:
a tracker (30) configured to track the detected object (4) in the flow channel (10).

15. A method (100) for characterizing objects (4) comprising:
providing (101) a continuous flow of liquid (2) carrying objects (4) in a flow channel (10), wherein;
the flow channel (10) comprises at least one zone (12, 12', 12"),
each zone (12, 12', 12") of the flow channel (10) is associated with an object category, and
each zone (12, 12', 12") of the flow channel (10) comprises at least one surface coated (14, 14', 14") with molecules having an affinity and specificity to the object category associated with the zone (12, 12', 12"), the at least one surface (14, 14', 14") of the zone (12, 12', 12") being configured to modify, by the molecules coating the at least one surface, a movement of an object (4) belonging to an associated object category of the zone (12, 12', 12") as the object (4), carried by the flow of liquid (2), passes the zone (12, 12', 12"), whereby the at least one surface (14, 14', 14") forms at least one object movement modifying (OMM) surface (14, 14', 14"), wherein the at least one OMM surface (14, 14', 14") of at least one zone (12, 12', 12") of the flow channel (10) is configured to modify the movement of the object (4) belonging to the associated object category of the zone by binding and releasing the object (4) belonging to the associated object category of the zone (12, 12', 12"); and
modulating (102) a force exerted on the object (4) for exerting a first condition and a second condition on the object (4), the first condition being adapted to promote the binding of an object belonging to the object category to the OMM surface (14, 14', 14") and the second condition being adapted to promote the releasing of an object bound to the OMM surface (14, 14', 14").
